Europäisches Patentamt

European Patent Office

Office européen des brevets

(19)

(11) Veröffentlichungsnummer : **0 019 307**
**B1**

(12) **EUROPÄISCHE PATENTSCHRIFT**

(45) Veröffentlichungstag der Patentschrift :
24.11.82

(21) Anmeldenummer : 80200258.4

(22) Anmeldetag : 21.03.80

(51) Int. Cl.³ : **C 01 B 13/11**

(54) **Vorrichtung zur Erzeugung von Ozon.**

(30) Priorität : 22.05.79 CH 4782/79

(43) Veröffentlichungstag der Anmeldung :
26.11.80 (Patentblatt 80/24)

(45) Bekanntmachung des Hinweises auf die Patenterteilung : 24.11.82 Patentblatt 82/47

(84) Benannte Vertragsstaaten :
CH DE FR GB

(56) Entgegenhaltungen :
FR A 1 322 319
FR A 2 341 519
FR A 2 405 896
US A 3 565 776
US A 4 051 043

(73) Patentinhaber : BBC Aktiengesellschaft Brown,
Boveri & Cie.
Haselstrasse
CH-5401 Baden (CH)

(72) Erfinder : Kogelschatz, Ulrich Dr. rer. nat. Phys.
Obere Parkstrasse 358
CH-5212 Hausen (CH)

Jouve, 18, rue St-Denis, 75001 Paris, France

EP 0 019 307 B1

Vorrichtung zur Erzeugung von Ozon

Die Erfindung betrifft eine Vorrichtung gemäss dem Oberbegriff des Anspruchs 1.

Vorrichtungen zur Erzeugung von Ozon werden in zunehmendem Mass in industriellen Betrieben eingesetzt, da Ozon als starkes Oxidationsmittel zur Abwasserreinigung, Luftverbesserung, Trinkwasserbehandlung, Lebensmittellagerung sowie in der Medizin und Chemie verwendet wird.

Aus der US-PS 4 051 043 ist eine Vorrichtung zur Erzeugung von Ozon durch stille Gasentladung bekannt, die aus einer Entladungszelle besteht, welche über eine Schaltanordnung mit einer Spannungsquelle zur Energieversorgung verbunden ist. Die Zelle besteht aus zwei zueinander parallelen, elektrisch leitenden, plattenförmigen Elektroden, die durch eine parallel zu diesen verlaufende dielektrische Schicht von gleichmässiger Dicke sowie durch einen Luftspalt voneinander getrennt sind. Die dielektrische Schicht ist auf einer der Elektroden angeordnet, so dass der Luftspalt zwischen der Schicht und der zweiten Elektrode verläuft. Die dielektrische Schicht hat die Aufgabe den Entladungsstrom zu begrenzen und verhindert die Entstehung von stromstarken Funken- und Bogenentladungen, die zu unzulässigen Temperaturerhöhungen im Entladungsspalt und damit zur Zerstörung des gebildeten Ozons führen würden. Bei derartigen Ozonisatoren entsteht eine Vielzahl von räumlich und zeitlich statistisch verteilten flächigen Entladungen. Die Grösse des sich entladenden Flächenelements hängt zusätzlich von der Oberflächenleitfähigkeit der dielektrischen Schicht und dem Feuchtigkeitsgehalt der den Entladungsspalt durchströmenden Luft ab. Bei einem derartigen Ozonisator kann die Grösse der statistisch verteilten unkontrollierten Einzelentladungen nicht auf einen für die Ozonproduktion günstigsten Wert eingestellt werden.

Der im Anspruch 1 angegebenen Erfindung liegt die Aufgabe zugrunde, einen Ozonisator zu schaffen, der sich durch hohe Ozonausbeute bei geringem Energiebedarf auszeichnet.

Durch die Ausbildung des Dielektrikums nach der Erfindung wird erreicht, dass die im Entladungsspalt während des Entladungsprozesses auf das sauerstoffhaltige Gasgemisch übertragenen Ladungsmengen auf einen den jeweiligen Erfordernissen angepassten exakten Wert eingestellt werden können, wodurch die Ozonausbeute wesentlich erhöht wird.

Vorteilhafte Weiterbildungen der Erfindung sind in den Unteransprüchen beschrieben.

Die Erhöhungen zwischen den elektrisch leitenden Inseln gemäss Anspruch 2 erhöhen die elektrische Isolation und verhindern eventuell auftretende elektrische Ueberschläge zwischen diesen, falls sie sich nicht gleichzeitig entladen und dadurch kurzzeitig auf unterschiedlichem elektrischen Potential liegen.

Die Anordnung nach Anspruch 3 zeichnet sich zusätzlich durch eine besonders einfach zu realisierende Lösung aus, um die elektrisch leitenden Inseln gut voneinander zu isolieren. Bei Anordnung der Elektroden auf plattenförmigen Trägern gemäss Anspruch 4 kann die Breite des Luftspaltes zwischen den Elektroden durch Verschieben der Trägerplatten senkrecht zur Längsachse des Ozonisators den jeweiligen Erfordernissen angepasst werden. In Anspruch 5 ist eine Ausführungsform des Ozonisators beschrieben, die eine besonders gute Kühlung der Elektroden ermöglicht.

Die weitere Ausgestaltung der Erfindung nach Anspruch 6 ermöglicht es, das Dielektrikum mit einer grossen Anzahl elektrisch leitender Inseln zu belegen und dennoch elektrische Ueberschläge zwischen den Inseln zu verhindern was insbesondere für die sechseckige Ausgestaltung gilt.

Nach Anspruch 7 können die Inseln auch als runde Plättchen ausgebildet sein ; bei einer etwas weniger günstigen Flächenausnutzung ergibt sich der Vorteil gleichmässiger Potentialverteilung.

Die Erfindung wird im folgenden anhand von in der Zeichnung dargestellten Ausführungsbeispielen näher erläutert.

In der Zeichnung zeigt

Figur 1 einen Schnitt entlang der Längsachse eines Plattenozonisators,

Figur 2 einen axialen Schnitt durch einen Röhrenozonisator,

Figur 3 einen Schnitt entlang der Linie I-I in Figur 1,

Figur 4 Schnitte entlang der Linien II-II bzw. III-III in Figur 2,

Figur 5 eine Draufsicht auf einen Dielektrikumsausschnitt.

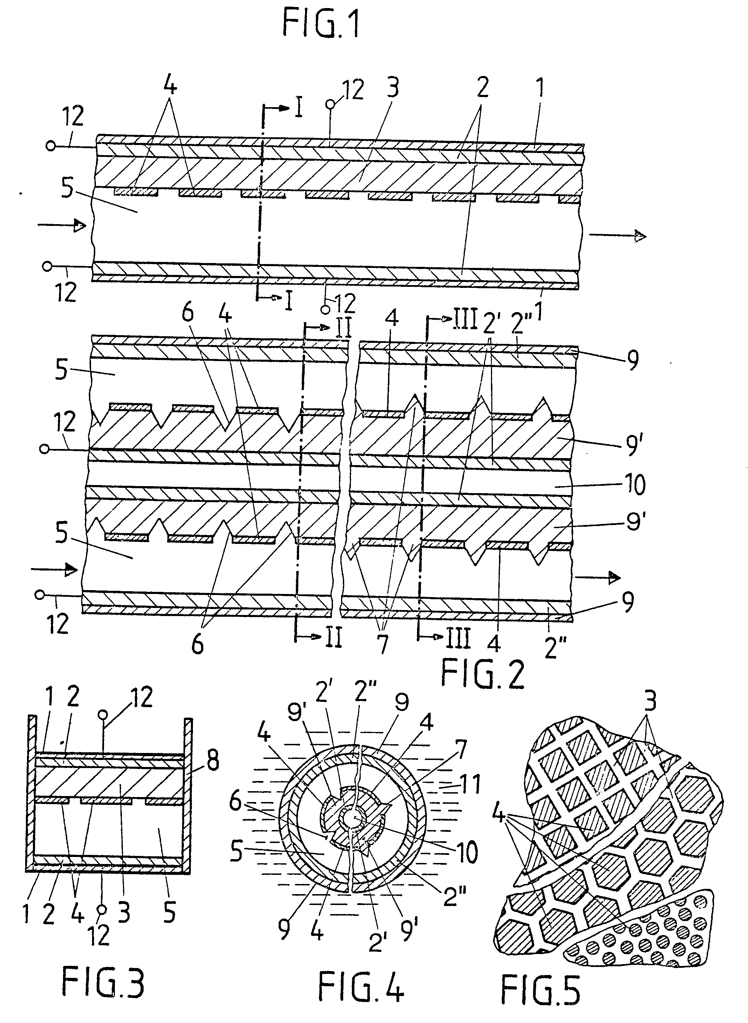

Bei dem in Figur 1 und 3 dargestellten Plattenozonisator sind auf plattenförmigen, voneinander senkrecht zu ihrer Längsachse distanzierten Trägern 1 aus Isolationsmaterial, z.B. Glas, Elektroden 2 in Form von dünnen, elektrisch leitenden Schichten, z.B. aus Leitsilber, aufgedampft. Eine der Elektroden 2 ist auf ihrer der zweiten Elektrode zugewandten Oberfläche mit einem Dielektrikum 3, z.B. Glas, belegt. Das Dielektrikum 3 ist auf seiner der zweiten Elektrode gegenüberliegenden Fläche mit elektrisch leitenden, voneinander getrennten Inseln 4, die z.B. einen Abstand von 0,1-1 mm haben, versehen und zum Beispiel aus Aluminium oder Leitsilber bestehen, sowie eine Dicke von etwa 1 μ aufweisen können. Zwischen dem Dielektrikum 3 und der zweiten Elektrode verläuft ein Entladungsspalt 5. Die elektrisch leitenden Schichten können sehr einfach durch Bedampf- und Aetztechniken, wie sie in der Halbleitertechnologie Anwendung finden, hergestellt werden. Die elektrisch leitenden Inseln 4 sind, wie in Figur 5 dargestellt ist, als Quadrate oder regelmässige Sechsecke ausgeführt, können jedoch auch als runde Plättchen ausgebildet sein.

Die Elektroden 2 sind über Anschlussklemmen 12 mit einer Spannungsquelle zur Energieversorgung des Ozonisators verbunden (nicht gezeichnet).

Eine geeignete Spannungsquelle ist beispielsweise in der bereits genannten US-PS 4 051 043 beschrieben.

Die Wirkungsweise des Erfindungsgegenstandes ist folgende :

Ein sauerstoffhaltiges Gasgemisch oder reiner Sauerstoff strömt durch den Entladungsspalt 5, in dem stille Gasentladung stattfindet. Dadurch erfolgt eine Spaltung eines Teils des vorhandenen Sauerstoffs. Der dadurch entstehende atomare Sauerstoff verbindet sich mit dem noch vorhandenen molekularen Sauerstoff zu Ozon. Durch das Dielektrikum 3 wird der Entladungsstrom begrenzt und die Entstehung von stromstarken Funken- und Bogenentladungen verhindert, was zu einer Temperaturerhöhung im Gas führen würde und damit zur Zerstörung des gebildeten Ozons. Die stille Gasentladung erfolgt dabei durch Entladung der auf den leitenden Inseln 4 befindlichen Ladungsmengen durch das Gas. Die Aufladung der Inseln erfolgt mit einer ganz bestimmten Ladungsmenge, die im wesentlichen von der Grösse der Inselfläche und der angelegten Spannung abhängt, über die mit dem Dielektrikum belegte Elektrode und das Dielektrikum 3 selbst.

Bei dem in den Fig. 2 und 4 dargestellten Röhrenozonisator sind zwei konzentrisch zueinander und in einem Abstand senkrecht zu ihrer Längsachse voneinander distanzierte Rohre 9, 9' mit Elektroden versehen.

Das äussere Rohr 9 ist an seiner dem inneren Rohr 9' zugewandten Fläche mit einer Aussenelektrode 2" versehen, die als Metallrohr ausgebildet ist. Das innere Rohr 9' besteht aus Dielektrikumsmaterial. An der Innenwandung des inneren Rohres 9' ist eine Innenelektrode 2' als dünne Aluminium- oder Silberschicht aufgedampft. Das innere Rohr 9' ist an seiner dem Metallrohr 2" zugewandten Oberfläche mit einer elektrisch leitenden, getrennte Inseln 4 bildenden Schicht aus Leitsilber oder Aluminium versehen. Zwischen den Inseln 4 sind Vertiefungen 6 mit einer Tiefe von ca. 0,1 bis 1 mm oder, wie im rechten Teil von Figur 2 bzw. 4 dargestellt, Erhöhungen 7 mit einer Höhe von ca. 0,1 bis 1 mm aus dielektrischem Material, z.B. Glas, vorgesehen. Parallel zur Längsachse des Ozonisators wird durch die Innenwandung der Aussenelektrode 2" und die Oberfläche der inneren Rohres 9' ein Entladungsspalt 5 gebildet. Die Aussenwand des äusseren Rohres 9 ist von Kühlwasser 11 umgeben. Der Innenraum des inneren Rohres 9' dient als Kühlkanal 10 und wird von einem Kühlmedium, z.B. Luft, Wasser oder Oel durchströmt.

Ueber Anschlussklemmen 12 sind die Elektroden 2', 2" mit einer Spannungsquelle verbunden (nicht gezeichnet). Eine geeignete Anordnung zur Energieversorgung der Ozonisators ist z.B. in der US-PS 4 051 043 beschrieben.

Richtwerte für die Abmessungen eines derartigen Röhrenozonisators sind : Für den Aussendurchmesser des inneren Rohres 9' 44 mm, für die Breite des Entladungsspalts 5 2 mm, für den Innendurchmesser der als Metallrohr ausgebildeten Aussenelektrode 2" 46 mm und für die Brennspannung 8 kV. Die Grösse der Inselfläche kann 10 mm² bis 1 000 mm² betragen.

Die Wirkungsweise des Röhrenozonisators ist folgende :

Ein sauerstoffhaltiges Gasgemisch oder reiner Sauerstoff strömt durch den Entladungsspalt 5, in dem in einem zwischen den Elektroden 2', 2" erzeugten elektrischen Feld stille Gasentladung stattfindet. Dadurch erfolgt eine Spaltung eines Teils des vorhandenen Sauerstoffs. Der dadurch entstehende atomare Sauerstoff verbindet sich mit dem noch vorhandenen molekularen Sauerstoff zu Ozon. Die stille Gasentladung in dem Entladungsspalt 5 erfolgt in genau definierten, impulsförmigen Einzelentladungen zwischen den elektrisch leitenden Inseln 4 und der diesen gegenüberliegenden Aussenelektrode 2". Durch das dielektrische Rohr 9' wird der Entladungsstrom begrenzt und die Entstehung von stromstarken Funken- und Bogenentladungen verhindert, was zu einer Temperaturerhöhung in dem Gas führen würde und damit zur Zerstörung des gebildeten Ozons. Die Aufladung der elektrisch leitenden Inseln (4) erfolgt in gleicher Weise wie es bereits in der Beschreibung von Figur 1 bzw. 3 ausgeführt wurde. Die Erhöhungen oder Vertiefungen zwischen den Inseln 4 erhöhen die Isolation und verhindern Ueberschläge zwischen diesen, falls sie sich nicht gleichzeitig entladen und dadurch kurzzeitig auf unterschiedlichem elektrischen Potential liegen. Die Kühlung der Aussenelektrode 2" erfolgt durch das an der Aussenfläche des äusseren Rohres 9 entlangströmende Kühlwasser 11. Die Innenelektrode 2' wird durch ein Kühlmedium, z.B. Luft, Oel oder Wasser, gekühlt, das durch den Innenraum des inneren Rohres 9' strömt.

## Ansprüche

1. Ozonisator mit zwei Elektroden von denen wenigstens eine auf ihrer der anderen Elektrode zugewandten Oberfläche mit einem Dielektrikum belegt ist, dadurch gekennzeichnet, dass das Dielektrikum (3) mit einer elektrisch leitenden, elektrisch getrennte Inseln (4) bildenden Schicht versehen ist.

2. Ozonisator nach Anspruch 1, dadurch gekennzeichnet, dass das Dielektrikum (3) zwischen der getrennte Inseln (4) bildenden Schicht mit Erhöhungen (7) versehen ist.

3. Ozonisator nach Anspruch 1, dadurch gekennzeichnet, dass das Dielektrikum (3) zwischen der getrennte Inseln (4) bildenden Schicht mit Vertiefungen (6) versehen ist.

4. Ozonisator nach Anspruch 1, dadurch gekennzeichnet, dass die Elektroden (2) auf plattenförmigen, vorzugsweise gegeneinander verschiebbaren Trägern (1) angeordnet sind.

5. Ozonisator nach Anspruch 1, dadurch gekennzeichnet, dass der Ozonisator als Röhrenozonisator ausgeführt ist.

6. Ozonisator nach Anspruch 1, dadurch gekennzeichnet, dass die voneinander getrennten elektrisch leitenden Inseln (4) als Vielecke, vorzugsweise als regelmässige Sechsecke, ausgeführt sind.

7. Ozonisator nach Anspruch 1, dadurch gekennzeichnet, dass die Inseln (4) als runde Plättchen ausgeführt sind.

## Claims

1. Ozoniser, with two electrodes, at least one of which is coated with a dielectric on its surface which faces the other electrode, characterised in that the dielectric (3) is provided with an electrically conducting layer which forms electrically isolated islands (4).

2. Ozoniser according to Claim 1, characterised in that the dielectric (3) is provided with raised features (7) between the layer which forms isolated islands (4).

3. Ozoniser according to Claim 1, characterised in that the dielectric (3) is provided with depressions (6) between the layer which forms isolated islands (4).

4. Ozoniser according to Claim 1, characterised in that the electrodes (2) are arranged on plate-shaped carriers (1) which are preferably capable of being shifted towards one another.

5. Ozoniser according to Claim 1, characterised in that the ozoniser is designed as a tube-type ozoniser.

6. Ozoniser according to Claim 1, characterised in that the electrically conducting islands (4), which are isolated from each other, are designed as polygons, preferably as regular hexagons.

7. Ozoniser according to Claim 1, characterised in that the islands (4) are designed as circular platelets.

## Revendications

1. Ozoneur comportant deux électrodes dont une au moins est recouverte d'un diélectrique sur sa surface opposée à l'autre électrode, caractérisé en ce que le diélectrique (3) est pourvu d'une couche conductrice de l'électricité, formant des îlots (4) séparés électriquement les uns des autres.

2. Ozoneur suivant la revendication 1, caractérisé en ce que le diélectrique (3) présente des surélévations (7) entre les îlots séparés (4) de la couche conductrice.

3. Ozoneur suivant la revendication 1, caractérisé en ce que le diélectrique (3) présente des creux (6) entre les îlots séparés (4) de la couche conductrice.

4. Ozoneur suivant la revendication 1, caractérisé en ce que les électrodes (2), sont disposées sur des supports (1) en forme de plaque, de préférence pouvant être déplacés les uns par rapport aux autres.

5. Ozoneur suivant la revendication 1, caractérisé en ce qu'il a la forme d'un ozoneur à tubes.

6. Ozoneur suivant la revendication 1, caractérisé en ce que les îlots conducteurs de l'électricité (4) séparés les uns des autres ont la forme de polygones, de préférence d'hexagones réguliers.

7. Ozoneur suivant la revendication 1, caractérisé en ce que les îlots (4) ont la forme de plaquettes rondes.

# FIG.1

# FIG.2

# FIG.3

# FIG.4

# FIG.5